# EUROPEAN PATENT SPECIFICATION

(11) **EP 4 554 150 B1**
(45) Date of publication and mention of the grant of the patent: **19.08.2026**
(21) Application number: 22953173.6
(22) Date of filing: 29.07.2022
(51) Int. Cl.: H04L 67/125, H04L 12/28

(54) **VEHICLE CONTROL SYSTEM**
FAHRZEUGSTEUERUNGSSYSTEM
SYSTÈME DE COMMANDE DE VÉHICULE

(43) Date of publication of application: 14.05.2025
(73) Proprietor: MAZDA MOTOR CORPORATION, Hiroshima 730-8670 (JP)
(72) Inventor: FUJIE, Noriaki, Hiroshima 730-8670 (JP); HIROSE, Shingo, Hiroshima 730-8670 (JP); MORIMOTO, Yasuharu, Hiroshima 730-8670 (JP)
(74) Representative: Lorenz Seidler Gossel Part. mbB
(86) International application number: PCT/JP2022/029293
(87) International publication number: WO 2024/024085

(56) References cited:
- EP-A1- 4 007 217
- EP-A1- 4 020 894
- WO-A1-2020/203022
- WO-A1-2021/020206
- WO-A1-2021/039350
- US-A1- 2019 305 984

## Description

### TECHNICAL FIELD

The technique disclosed here relates to a technical field concerning vehicle control systems.

### BACKGROUND ART

Patent Document 1 shows an example configuration of an onboard network in which ECUs are connected to each other through the onboard network and devices such as a sensor and an actuator are connected to each ECU (see FIG. 1 of Patent Document 1). US 2019/305984 A1 discloses a network communication system that enables the sequential control of multiple loads over a network. To achieve this, a master node transmits a single command signal that defines the sequence of the ports to be controlled as well as a delay time between the individual activations. Each slave node receives this signal, determines its own position in the sequence, and from this calculates its individual output timing for activating the load. This method allows for the execution of complex, time-controlled processes with minimal network load. EP4020894A1 relates to vehicle control between a central ECU and a plurality of zone ECUs.

### CITATION LIST

### PATENT DOCUMENT

Patent Document 1: Japanese Patent Application Publication No.2017-212725

### SUMMARY OF THE INVENTION

### TECHNICAL PROBLEM

In recent years, advancement in application technologies has accelerated evolution and modification of vehicle functions, especially for vehicle behaviors.

In conventional vehicle development, to meet the evolution and modification of vehicle functions, onboard devices are individually developed to be tailored to each function, and then retrofitted to the vehicle after completion. For example, in the case of installing an additional function related to opening and closing operations of a door, an onboard device unit (e.g., a sensor, an actuator, and an ECU for controlling the sensor and the actuator) related to the additional function is developed alone, and then installed in the vehicle or used to replace an existing onboard device. The conventional configuration segmented for individual functions offers advantages such as facilitating adoption of only enhanced functions as add-ons to the vehicle and simplifying outsourcing of development for each function. In a case where the pace of vehicle function evolution is gradual, this conventional configuration is significantly efficient.

However, as the speed of advancement in vehicle behavior and occurrence of functional evolution at vehicle ends, the required development workload inevitably grows. That is, the conventional development approach faces challenges in responding flexibly and promptly to rapid evolution and modification of vehicle functions.

For example, even in a case where a vehicle behavior is slightly evolved, all the sensors, actuators, and ECUs need to be updated. In a case where the functions of the sensors and actuators are evolved and modified, all the components including ECUs need to be updated. Further, in a case where a supplier of actuators is changed, all the components including control software included in ECUs need to be updated.

It is therefore an object of the techniques disclosed here to provide a vehicle control system capable of responding flexibly and promptly to evolution and modification of functions of a vehicle.

### SOLUTION TO THE PROBLEM

To solve the problems described above, the technique disclosed here is directed to a vehicle control system comprising the features of claim 1.

In this aspect, the recognition processing of recognizing information acquired by the sensors, the determination processing of determining an action of the vehicle, and the manipulation processing of specifying a manipulation target based on the determined action and transmitting an instruction code are consolidated in the master node. In other words, each slave node does not perform any of the recognition processing, the determination processing, and the manipulation processing, and transmits output of the sensor to the master node as a detection signal through the network line, and/or outputs an output signal based on the instruction code from the port based on the instruction code in manipulation of the manipulation target.

Accordingly, modification of functions of an application of the vehicle can be achieved without a change of the configuration of the slave nodes, that is, without influence on the slave nodes. In other words, evolution of functions of the application can be absorbed by the master node. In this manner, the system can respond flexibly and promptly to evolution and modification of functions of the application of the vehicle.

In addition, functions allocated to the slave nodes are significantly simple independently of functions of the vehicle, and thus, standardized and highly versatile slave nodes can be used regardless of sensors and manipulation targets connected to the slave nodes. This enables a significant reduction in development workload and costs, even in a case where functions of an application of the vehicle are evolved and modified, or where the types and numbers of sensors mounted on the vehicle and manipulation targets vary among vehicle models and grades.

In this aspect, the slave node that receives the output of the sensor may perform event processing of transmitting the detection signal to the master node using a change of the output of the sensor as a trigger.

By employing the event-triggered method described above, the system can quickly and accurately reflect the detection contents from the sensors into operation.

In this aspect, in the event processing, in the event processing, the slave node may transmit, to the master node, the detection signal for both the port at which the output of the sensor has changed and the port at which the output of the sensor has not changed.

In this aspect, the slave node that receives the output of the sensor and the slave node that receives the instruction code may be connected to the master node through different communication lines or may be the identical slave node.

### ADVANTAGES OF THE INVENTION

As described above, the technique disclosed here enables evolution of functions of an application to be absorbed by the master node, and thus, can respond flexibly and promptly to evolution and modification of functions of the application of the vehicle.

### BRIEF DESCRIPTION OF THE DRAWINGS

[FIG. 1] A block diagram illustrating an example configuration of a vehicle control system.
[FIG. 2] A conceptual illustration of an example of functional distribution to a master node and slave nodes.
[FIG. 3] A block diagram illustrating an example configuration of the master node.
[FIG. 4] A block diagram illustrating an example configuration of the slave nodes.
[FIG. 5] A table showing an example of a slave configuration area.
[FIG. 6] A table showing another example of the slave configuration area.
[FIG. 7] A circuit block diagram illustrating an example configuration of a driver unit.
[FIG. 8] A table showing an example of a master configuration area.
[FIG. 9] A flowchart showing an example of operation of the vehicle control system.
[FIG. 10] A table showing an example of configuration data transmitted and received by operation shown in FIG. 9.

### DESCRIPTION OF EMBODIMENTS

An exemplary embodiment will be described hereinafter with reference to the drawings. In the drawings, the same or corresponding parts are denoted by the same reference characters, and description thereof will not be repeated. Further, the following embodiment will primarily focus on configurations that are highly relevant to the contents of the present disclosure.

It should be noted that the following embodiment is an illustrative example and is not intended to limit the scope of this disclosure by the presence/absence of descriptions, or by the numerical values used as an example.

In this disclosure, regardless of whether the terms "system," "unit," "module," and "node" are used, some or all of the system / unit / module / node can be implemented with dedicated circuitry such as an application specific integrated circuit (ASIC) or a programmable logic array (PLA). Similarly, a system / unit / module / node can be implemented with processor circuitry that performs specific functions by executing computer-readable instructions (e.g., programs) to perform predetermined processing steps.

### <Vehicle Control System>

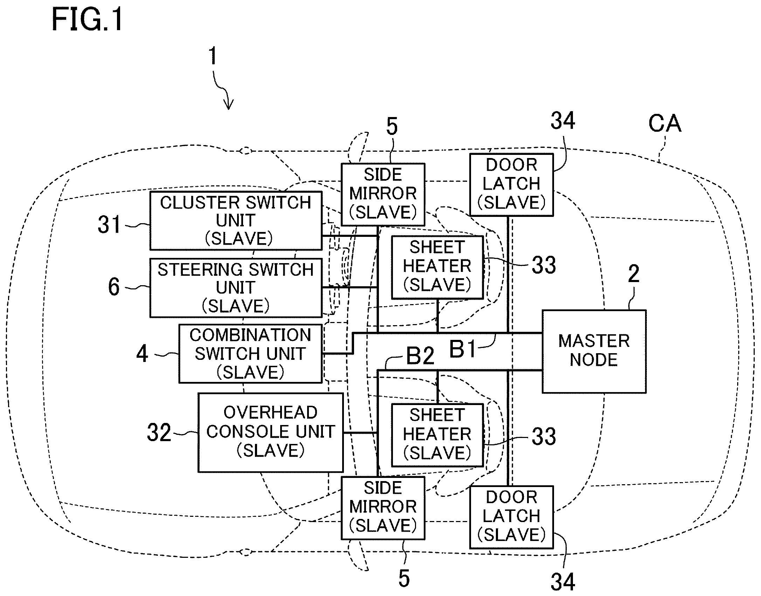

FIG. 1 is an example configuration of a vehicle control system according to an embodiment.

As illustrated in FIG. 1, a vehicle control system 1 is mounted on a vehicle CA, and a master node 2 is connected to a plurality of slave units through an onboard communication network.

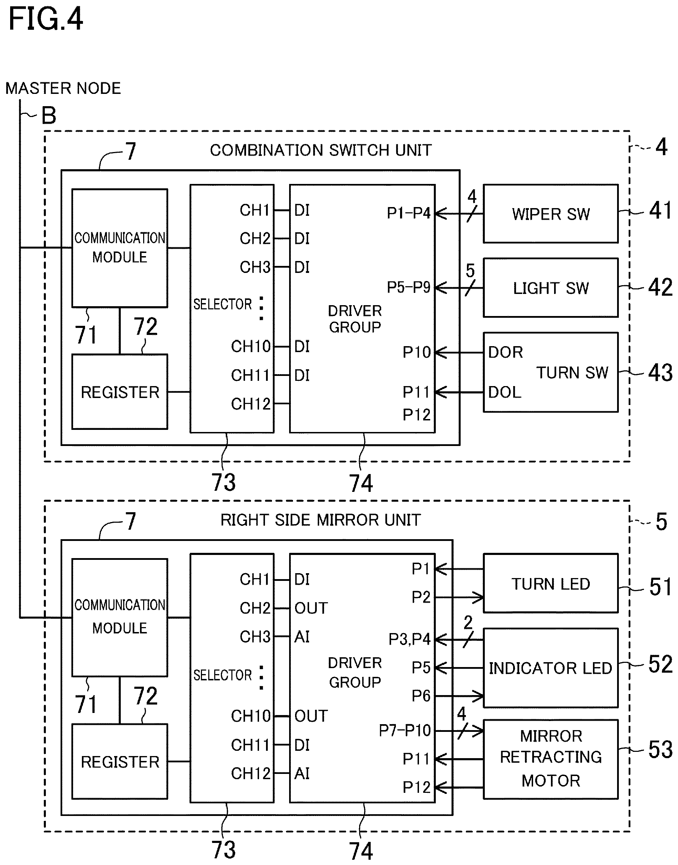

In the example of FIG. 1, a combination switch unit 4, left and right side mirror units 5, a steering switch unit 6, a cluster switch unit 31, an overhead console unit 32, left and right sheet heater units 33, and left and right door latch units 34 are exemplified as the plurality of slave units. Each of the slave units includes a slave node 7 having a common configuration (see FIG. 4). For convenience of description, the side mirror units 5, the door latch units 34, and the sheet heater units 33 will be described using the same reference numerals for the left and right sides.

Specifically, the master node 2 is connected to the plurality of slave units (the combination switch unit 4, the steering switch unit 6, the cluster switch unit 31, the right side mirror unit 5, the right sheet heater unit 33, and the right door latch unit 34 in this example) by a bus in a communication network B1. The master node 2 is connected to other slave units (the overhead console unit 32, the left side mirror unit 5, the left sheet heater unit 33, and the left door latch unit 34 in this example) by a bus in a communication network B2.

The communication networks B1 and B2 are, for example, communication lines in conformity with the clock extension peripheral interface (CXPI). The communication mode is not limited to the CXPI, and other communication modes (regardless of wired mode or wireless mode) may be employed. The number of communication networks used for the communication network is not particularly limited. A HUB (not shown), an ECU (not shown), and other units may be located at some point in the communication network B.

### -Function Distribution among Master Node and Slave Nodes-

The present disclosure has features in performing functional distribution of consolidating and integrating control of onboard devices related to a behavior of the vehicle CA to the master node 2 and in performing the consolidation and integration in a more advanced manner.

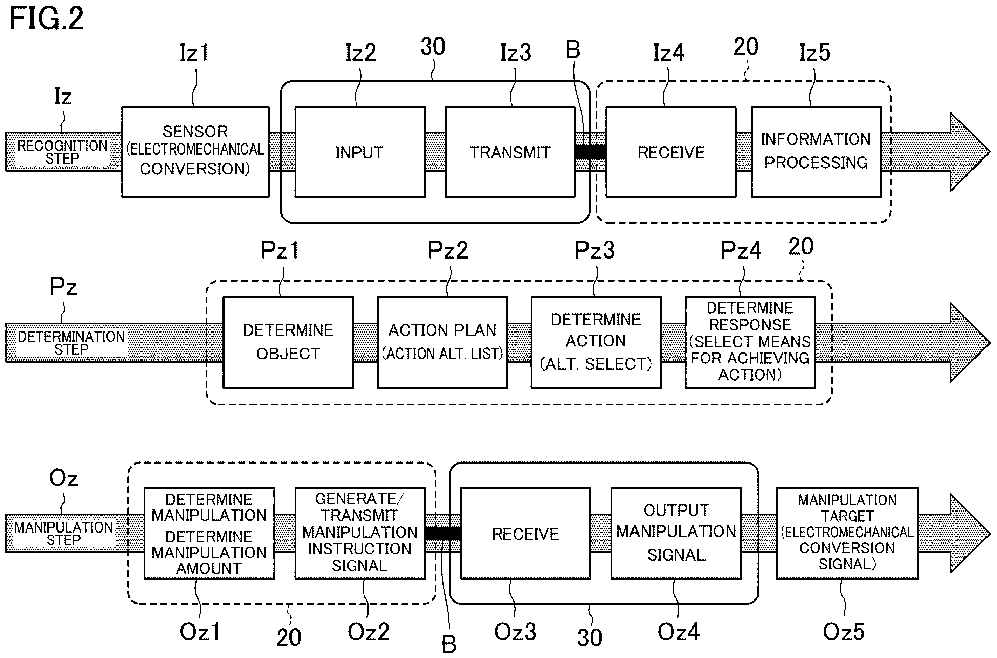

FIG. 2 is a conceptual illustration of an example of functional distribution to the master node 2 and the slave nodes 7 with respect to an action of the vehicle CA. In FIG. 2, the operation process of the vehicle CA is divided into recognition step Iz, determination step Pz, and manipulation step Oz, and each step is further subdivided. Functions 20 assigned to the master node 2 are surrounded by broken lines, and functions 30 assigned to the slave nodes 7 are surrounded by solid lines.

In the following explanation, processes performed in recognition step Iz, determination step Pz, and manipulation step Oz in the master node 2 and the slave nodes 7 will be described using an example of a case where the weather changes from clear to rainy conditions (hereinafter referred to simply as "weather change").

### [Recognition Step]

In recognition step Iz, information acquired by a sensor mounted on the onboard device is recognized based on an output signal of the sensor. The term "sensor" herein includes not only sensors that measure or detect various physical quantities such as temperature, voltage, and current but also switches that accept various manipulations, cameras that capture images inside and outside the vehicle, and radars that recognize targets and others outside the vehicle, and is used broadly to include devices that output electromechanical conversion signals. Sensors acquire information such as vehicle behavior information, passenger manipulation information, information on current flowing in actuators and voltage applied to the actuators, vehicle malfunction status information, passenger condition data, and/or external environment information (hereinafter collectively referred to as "detection information").

Recognition step Iz include steps Iz2 and Iz3 performed in the slave nodes 7 and steps Iz4 and Iz5 performed in the master node 2. In this example, onboard devices are incorporated in the slave nodes 7, but onboard devices may be located outside the slave nodes 7.

First, in step Iz1, a sensor mounted on the onboard device detects detection information. As a specific example, in the case of occurrence of "weather change" described above, a raindrop sensor and a light-receiving sensor (not shown) as sensors detect detection information (e.g., raindrop adhesion or changes in light receiving amount).

Each slave node 7 receives an output of the sensor through a port P described later (step Iz2). Examples of the output herein include a detection signal of the sensor, physical quantities such as current, voltage, and temperature detected by the sensor, and an electromechanical conversion signal of the actuator.

In next step Iz3, the slave node 7 performs signalization processing and data conversion processing on the sensor output, and transmits the resulting signal to the master node 2 as a detection signal. The signalization processing herein refers to, for example, separating information output from the sensor into meaningful information and nonmeaningful information and extracting only the meaningful information. For example, a chatter filter is exemplified as the signalization processing. The data conversion processing refers to, for example, transforming discretized information into information suitable for continuous processing. More specifically, in the case of performing continuous processing such as PID control in subsequent information processing or application processing, moving average processing is performed on discrete data to thereby convert the data into the form of continuous signals. Through the signalization processing and the data conversion processing, only information such as a voltage of a rain sensor (e.g., physical quantities) is obtained.

In other words, in steps Iz2 and Iz3, the slave node 7 does not perform recognition and determination on specific contents of input information, but converts an input from the sensor into a predetermined signal format and transmits the input to the master node 2 as a detection signal.

The master node 2 receives the detection signal from the slave node 7 (step Iz4), and based on a change with time of the detection signal and connection data described later, recognizes specific contents of the detection information input from the sensor to the slave node 7 (step Iz5). In the example of "weather change" described above, information processing obtains recognition information indicating that the outside environment becomes dark with light intensity passing through the windshield falling below a predetermined value and it starts raining. That is, in the information processing, the voltage value of the rain sensor is transmitted to the master node 2 as detection data, and converted into meaningful information such as reflectance or the amount of raindrops. Information recognized in the recognition step will be hereinafter referred to as "recognition information."

### [Determination Step]

In determination step Pz, based on the recognition information recognized in the recognition step, an action and a reaction of the vehicle CA are determined. Steps Pz1 through Pz4 as constituent of determination step Pz are performed by the master node 2.

Specifically, in step Pz1, the master node 2 determines an object of action of the vehicle CA based on the recognition information recognized in recognition step Iz. In the example of "weather change" above, an object "to respond with an appropriate behavior when the external environment becomes dark and it starts raining" is determined.

Then, in step Pz2, the master node 2 sets an action plan for achieving the object determined in step Pz1. At this time, action plans including alternative measures are listed, and an action list of action planes is created. Examples of action plans corresponding to the "behavior in response to dark external environment and rainfall" described above include action plans such as "activating wipers," "turning on an auto-light function of the vehicle CA," and "limiting the upper speed of the vehicle CA."

In subsequent step Pz3, the master node 2 determines actions to be actually executed from actions listed in the action plan. For example, the master node 2 selects actions to be actually executed from the action list. In the example of "weather change" described above, actions of "activating wipers" and "turning on an auto-light function of the vehicle" are selected as actions to be executed.

Thereafter, in step Pz4, the master node 2 selects measures for achieving the actions determined in step Pz3 (hereinafter also referred to as "countermeasures"). In the example of "weather change," with respect to actions of "activating wipers" and "turning on an auto-light function of the vehicle," for example, a wiper unit (not shown), a headlight unit (not shown), and a taillight unit (not shown) are selected.

### [Manipulation Step]

Manipulation step Oz includes steps Oz1 and Oz2 performed by the master node 2 and steps Oz3 through Oz5 performed by the slave nodes 7.

In step Oz1, the master node 2 determines manipulation targets and manipulation amounts for achieving actions and response determined in determination step Pz. The manipulation targets herein broadly include targets to be manipulated to achieve actions and response, such as illumination devices and actuators. The illumination devices include various types of LEDs, electric bulbs, and the like for use in headlights, indicators, turn lamps, and other equipment. The actuators include body-related devices such as motors for driving wipers and mirrors and power-related devices for use in engines, brakes, and other equipment.

In the example of "weather change" described above, as manipulation contents of the wiper unit, turning on the wipers for the windshield and an operation speed and an operation interval of the wipers are determined, for example. As manipulation contents of the headlight unit and the taillight unit, turning on the headlight and the taillight and luminance of these lights are determined, for example.

In next step Oz2, the master node 2 performs processes of (1) specifying a port P to which a manipulation target is connected (hereinafter referred to as a "manipulation port P") based on connection data, (2) generating an instruction code for instructing an output content of the manipulation port P, and (3) transmitting a manipulation instruction signal including the instruction code to the slave node including the manipulation port P. In the example of "weather change" described above, for example, the master node 2 transmits an instruction code for instructing an output content of the manipulation port P to which wipers are connected, to the wiper unit (not shown), transmits an instruction code indicating an output content of the manipulation port P to which the headlight is connected, to the headlight unit(not shown), and transmits an instruction code indicating an output content of the manipulation port P to which the taillight is connected, to the taillight unit (not shown).

Each slave node 7 receives a manipulation instruction signal from the master node 2, and outputs a manipulation signal based on the instruction code from the manipulation port P based on the instruction code.

Specifically, each slave node 7 generates a signal to be output from the manipulation port P based on the instruction code through protocol conversion of the instruction code and/or reference of a specified register, for example (step Oz3). Then, the slave node 7 outputs a manipulation signal from the manipulation port P specified by the instruction code to a manipulation device (step Oz4). Accordingly, (1) the wipers are driven in the wiper unit, (2) the headlight is turned on in the headlight unit, and (3) the taillight is turned on in the taillight unit.

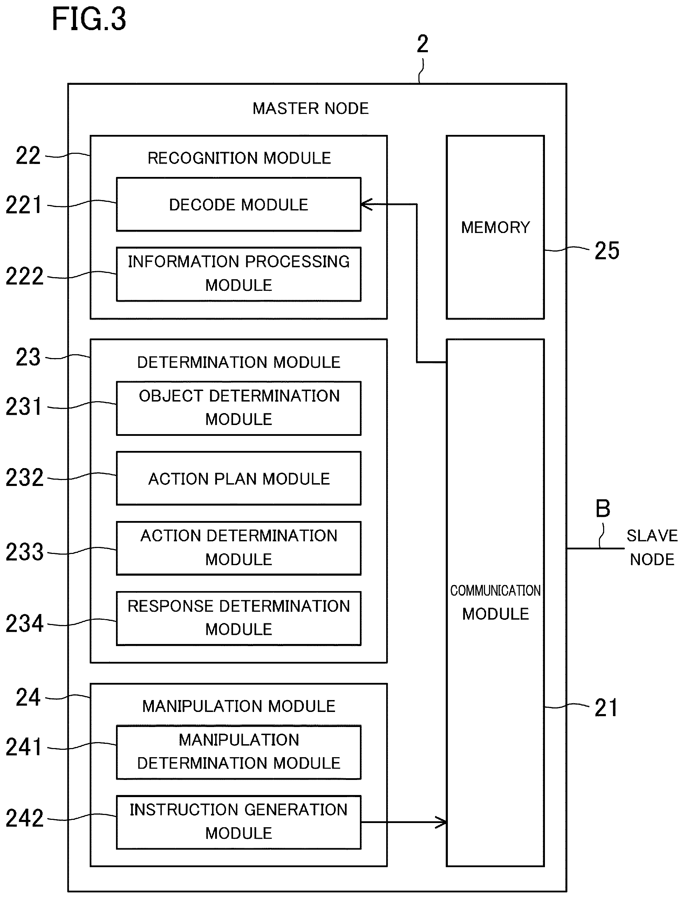

FIG. 3 is a block diagram illustrating an example configuration of the master node 2. FIG. 4 is a block diagram illustrating an example configuration of the slave nodes 7.

### -Slave Unit-

FIG. 4 shows an example configuration of the combination switch unit 4 and one of the side mirror units 5 at the right (hereinafter referred to as a "right side mirror unit 5") in the slave unit exemplified in FIG. 1.

As shown in FIG. 4, each of the combination switch unit 4 and the right side mirror unit 5 includes the common slave node 7. Each of the slave nodes 7 includes 12 ports P for connection to onboard devices. The slave node 7 is implemented by an integrated circuit (IC), for example.

In this example, in the combination switch unit 4, a wiper switch 41 that receives wiper manipulation is connected to the ports P1 through P4, a light switch 42 that receives light manipulation is connected to the ports P5 through P9, and a turn switch 43 that receives manipulation of a turn lamp is connected to the ports P10 and P11. P12 denotes a reserve port P. The wiper switch 41, the light switch 42, and the turn switch 43 are examples of onboard devices including sensors.

Similarly, in the right side mirror unit 5, an LED 51 for the turn lamp (hereinafter referred to as a "turn LED 51") is connected to the ports P1 and P2, an LED 52 for the indicator is connected to the ports P3 through P6, and a motor 53 for retracting mirrors is connected to the ports P7 through P12. Here, the turn LED 51, the LED 52, and the motor 53 are examples of onboard devices including sensors and manipulation targets. In other words, the turn LED 51, the LED 52, and the motor 53 are examples of slave nodes each having the function of outputting a detection signal to the master node in response to an output of the sensor and the function of outputting a manipulation signal based on an instruction signal received from the master node, from the port P based on the instruction code.

### [Slave Node]

Each of the slave nodes 7 includes a communication module 71, a register 72, a selector 73, and a driver group 74.

### [Communication Module]

The communication module 71 is connected to a communication module 21 of the master node 2 described later through a communication network B, and performs two-way communication with the communication module 21 in conformity with the CXPI. The communication module 71 includes, for example, an input/output circuit connected to the communication network B, and an encoder and a decoder connected to the input/output circuit. A known configuration can be applied to a specific circuit configuration of the communication module 71, and thus, detailed description thereof will be omitted here.

### [Driver Group]

The driver group 74 includes a plurality of driver units 740 connected to the individual ports P in a one-to-one relationship. For example, in a case where the slave node 7 includes 12 ports P, the driver group 74 includes 12 driver units 740.

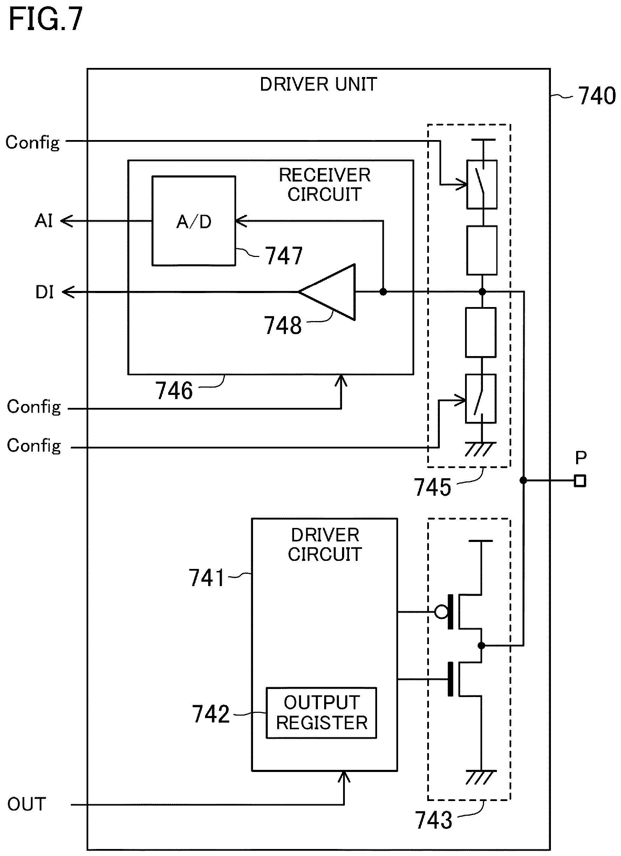

The driver units 740 are IO circuits that can be used as input ports or output ports by external setting. General purpose input/output circuits known to date, for example, are applicable as the driver units 740. FIG. 7 illustrates an example configuration of the driver unit 740.

The driver unit 740 exemplified in FIG. 7 includes an output circuit 743 connected to the port P and a driver circuit 741 that drives the output circuit 743 based on output setting data of an output register 742. The output setting data of the output register 742 is rewritable by a setting signal input from an OUT terminal.

The driver unit 740 includes an input circuit 745 that receives an input to the port P, and a receiver circuit 746 that converts the input received by the input circuit 745 to a detection signal. The receiver circuit 746 includes an AD converter 747 and a comparator 748. In a case where the attribute of the port P is an analog input, the AD converter 747 performs analog-to-digital conversion on an input to the port P, and outputs the resulting signal from an AI terminal. In a case where the attribute of the port p is a digital input, the comparator 748 outputs an input to the port P as a digital signal from a DI terminal.

The driver unit 740 can change setting of each component based on a configuration signal based on an instruction code. For example, a filter constant of a digital filter of the receiver circuit 746 can be changed based on the configuration signal.

### [Selector]

The selector 73 has the function of selecting which terminal to activate among terminals (OUT terminal, AI terminal, DI terminal) of the driver unit 740, based on attribute data of each port P set in a slave configuration area 77 described later.

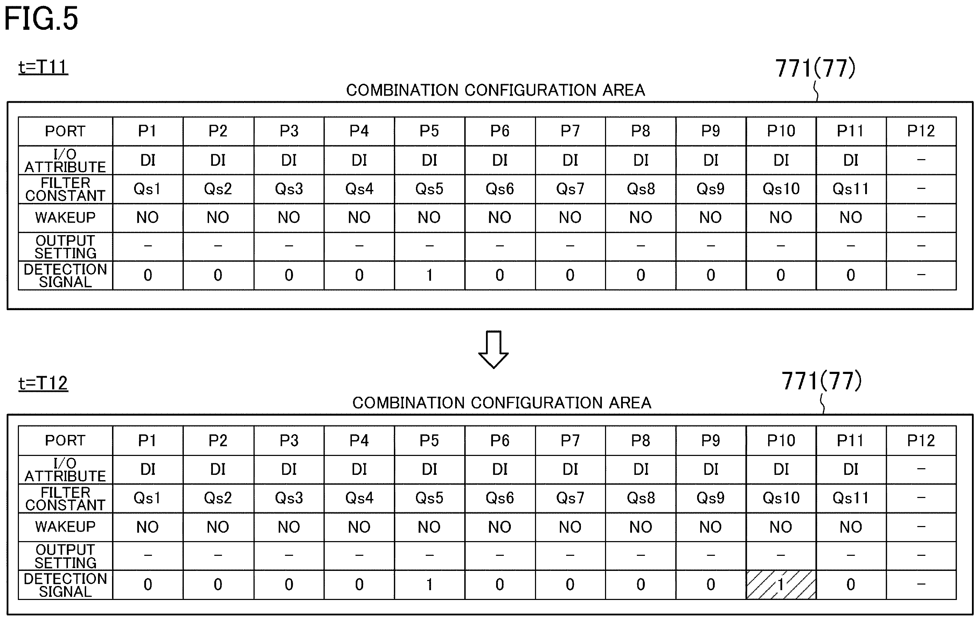

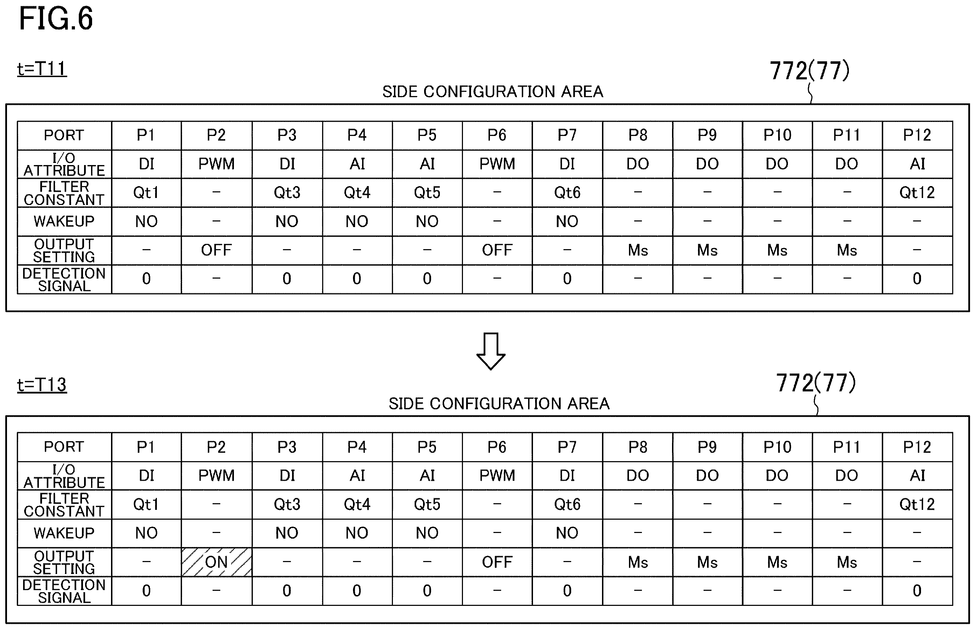

In the case of activating the AI terminal, an analog input signal is input from the port P. In this case, the analog input signal is converted to a digital signal in the input circuit 745 and the AD converter 747, output from the AI terminal, and written in a detection signal area of the register 72 through the selector 73. In FIGS. 5 and 6 described later, a row denoted as "detection signal" corresponds to the detection signal area. The detection signal area may or may not be included in the slave configuration area 77.

In the case of activating the DI terminal, a digital input signal is input from the port P. In this case, the digital input signal is output from the DI terminal through the input circuit 745 and the comparator 748 and written in the detection signal area of the register 72 through the selector 73.

In the case of activating the OUT terminal, output setting data based on an instruction code is reflected in the output register 742 of the driver circuit 741. The driver circuit 741 drives the output circuit 743 and outputs a manipulation signal (one of a digital signal, an analog signal, or a PWM signal) based on the output setting data of the output register 742, from the port P.

Here, the output setting data is generated based on an instruction code received from the master node 2 by using a logic circuit (not shown) in the selector 73 or a value of the register 72, for example. In other words, output setting based on the instruction code is given on the output register 742 of the driver circuit 741 connected to the port P based on the instruction code. Based on the output setting data, the output circuit 743 output a manipulation signal based on the instruction code through the port P. The instruction code is a code including identification data of the port P to which a manipulation target is connected and output setting of each port P associated with the identification data.

A known configuration can be applied to a specific circuit configuration of the selector, and thus, detailed description thereof will be omitted here.

### [Register]

The register 72 includes the slave configuration area 77 storing configuration data set for each slave node 7 (hereinafter referred to as "slave configuration data").

Examples of the slave configuration data include (1) attribute data of each port P, (2) a filter constant of a port P whose attribute is input (hereinafter referred to simply as an "input port P"), (3) WakeUp setting data based on an input signal to the input port P, and (4) output setting data of a port P whose attribute is output (hereinafter referred to simply as an "output port P").

Initial setting information of the slave configuration data herein will be referred to as "initial configuration data." The initial configuration data may be transmitted from the master node 2 at a predetermined timing (e.g., when power is turned on) or may be set in each slave node 7 beforehand.

The slave configuration area 77 stores a detection signal based on an input from each input port P, as well as the slave configuration data. The detection signal may be stored in a memory area other than the slave configuration area 77.

FIG. 5 shows an example of the slave configuration area 77 of the slave node 7 connected to the combination switch unit 4. FIG. 6 shows an example of the slave configuration area 77 of the slave node 7 of the right side mirror unit 5. For convenience of description, the slave configuration area 77 in FIG. 5 will be also hereinafter referred to as a combination configuration area 771 and the slave configuration area 77 in FIG. 6 will be also hereinafter referred to as a side configuration area 772.

In FIGS. 5 and 6, attribute data of each port P is listed in the row of I/O attribute. DI indicates that the port P is a digital input. DO indicates that the port P is a digital output, AI indicates that the port P is an analog input, AO indicates that the port P is an analog input (not shown), and PWM indicates that the port P is a PWM output.

For example, in the initial configuration data (t = T11) of the combination configuration area 771 shown in FIG. 5, the ports P1 through P11 are digital inputs. The filter constants of the ports P1 through P11 are Qs1 through Qs11, respectively.

Then, in the combination switch unit 4, with the configuration signal, a value of the digital filter of the driver unit 740 connected to the port P1 is set at Qs1. The same holds for the ports P2 through P11.

The selector 73 of the combination switch unit 4 activates the DI terminals of the driver units 740 connected to the ports P1 through P11. Accordingly, as described above, digital input signals from the ports P1 through P11 are written in the detection signal area of the register 72 through the selector 73.

### -Master Node-

The master node 2 exemplified in FIG. 3 includes the communication module 21, a recognition module 22, a determination module 23, a manipulation module 24, and a memory 25.

The master node 2 is constituted by, for example, one or more electronic control units (ECUs). The ECUs may be configured using a single integrated circuit (IC) or using a plurality of ICs. The IC may include a single core or die or may include a plurality of cooperative cores or dies.

### [Communication Module]

The communication module 21 has the function of receiving reception signals from the slave nodes 7 and transmitting transmission signals to the slave nodes 7 through the communication network B.

### [Memory]

The memory 25 includes a master configuration area 27 storing configuration data corresponding to each slave node 7 (hereinafter referred to as "master configuration data").

The master configuration data includes initial configuration data set in the slave nodes 7 and connection data. In other words, the master node 2 includes initial configuration data set in the individual slave nodes 7.

The connection data is data indicating a connection relationship between the ports P of the slave nodes 7 and device ports of onboard devices. In other words, the connection data indicates which functional device ports of onboard devices are connected to each port P of the slave node 7.

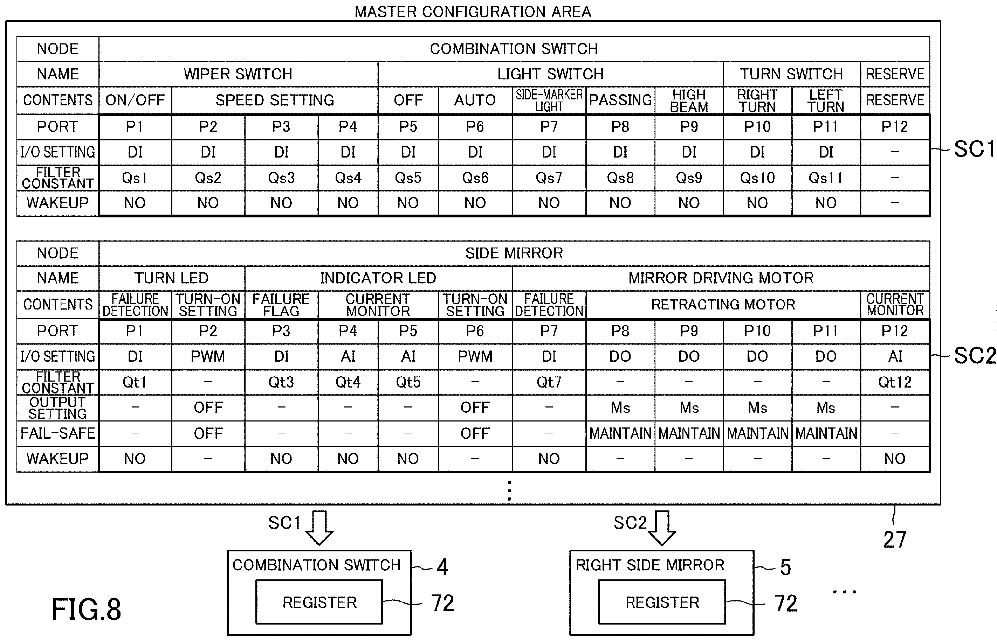

FIG. 8 shows an example of master configuration data of the combination switch unit 4 (indicated by the upper section in FIG. 8: also referred to as "first master configuration data") and master configuration data of the side mirror units 5 in the master configuration data (indicated by the lower section in FIG. 8: also referred to as "second master configuration data").

The first master configuration data includes (1) connection data indicating a connection relationship among the ports P1 through P12 of the combination switch unit 4 and device ports of the wiper switch 41, the light switch 42, and the turn switch 43, and (2) initial configuration data of the combination switch unit 4. In FIG. 8, the initial configuration data of the first master configuration data is denoted by SC1, and the initial configuration data of the second master configuration data is denoted by SC2.

More specifically, the device port to which an ON/OFF manipulation signal of the wiper switch 41 is output is connected to the port P1 of the combination switch unit 4, and thus, this connection relationship is stored as connection data of the first master configuration data.

Similarly, the device port to which a speed setting signal of the wiper switch 41 is output is connected to the ports P2 through P4 of the combination switch unit 4, and the device port to which a light-off setting signal of the light switch 42 is output is connected to the port P5. Thus, these connection relationships are stored as connection data of the first master configuration data. The same holds for the other ports P5 through P12 and the ports through P1 through P12 of the right side mirror unit 5.

The memory 25 may be an internal memory incorporated in the IC constituting the ECU, or may be an external memory externally attached to the IC. The memory may store programs for operating a CPU mounted on the IC or may store information such as a processing result in the CPU, for example.

### [Recognition Module]

The recognition module 22 performs recognition processing of steps Iz4 and Iz5 in recognition step Iz described above. Specifically, the recognition module 22 performs recognition processing of recognizing detected information acquired by the sensor as recognition information, based on a change with time of a detection signal received from the slave node.

The recognition module 22 includes a decode module 221 that performs decode processing on the detection signal received from the slave node 7, and an information processing module 222 that performs information processing in step Iz5 described above.

### [Determination Module]

The determination module 23 performs determination processing in determination step Pz (Pz1 through Pz4). Specifically, the determination module 23 performs determination processing of determining an action of the vehicle CA, based on the recognition information recognized in the recognition processing performed by the recognition module 22.

The determination module 23 includes an object determination module 231 that performs step Pz1 described above, an action plan module 232 that performs step Pz2 described above, an action determination module 233 that performs step Pz3 described above, and a response determination module 234 that performs step Pz4 described above.

### [Manipulation Module]

The manipulation module 24 performs processing in steps Oz1 and Oz2 of manipulation step Oz. Specifically, the manipulation module 24 performs manipulation processing of specifying a manipulation device corresponding to the action of the vehicle determined in the determination processing, generating a manipulation instruction signal of instructing manipulation of the specified manipulation device, and transmitting the manipulation instruction signal to the slave node to which the manipulation device is connected.

The manipulation module 24 includes a manipulation determination module 241 that performs step Oz1 described above, and an instruction generation module 242 that performs step Oz2 described above.

### -Operation of Vehicle Control System-

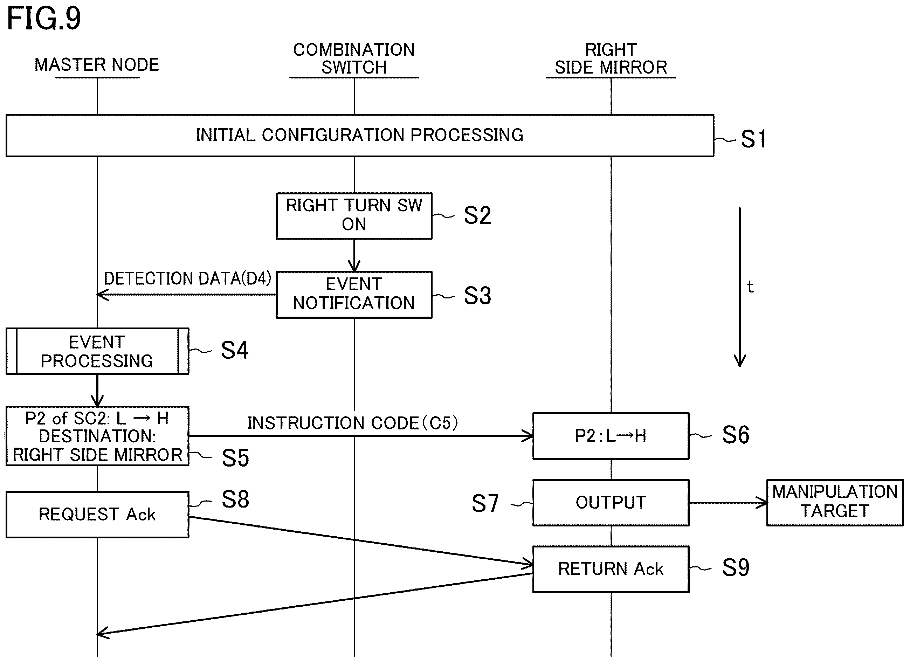

FIG. 9 is a flowchart showing an example of operation of a vehicle control system.

### [Step S1]

In vehicle control system 1, when power is turned on, initial configuration processing in step S1 is performed.

In the initial configuration processing, initial configuration data is transmitted from the master node 2 to each of the slave nodes 7. Each slave node 7 stores the initial configuration data received from the master node 2 in the slave configuration area 77. After the slave node 7 has stored the initial configuration data in the slave configuration area 77, the slave node 7 returns detection data in an initial state stored in the detection signal area in response to a request from the master node 2.

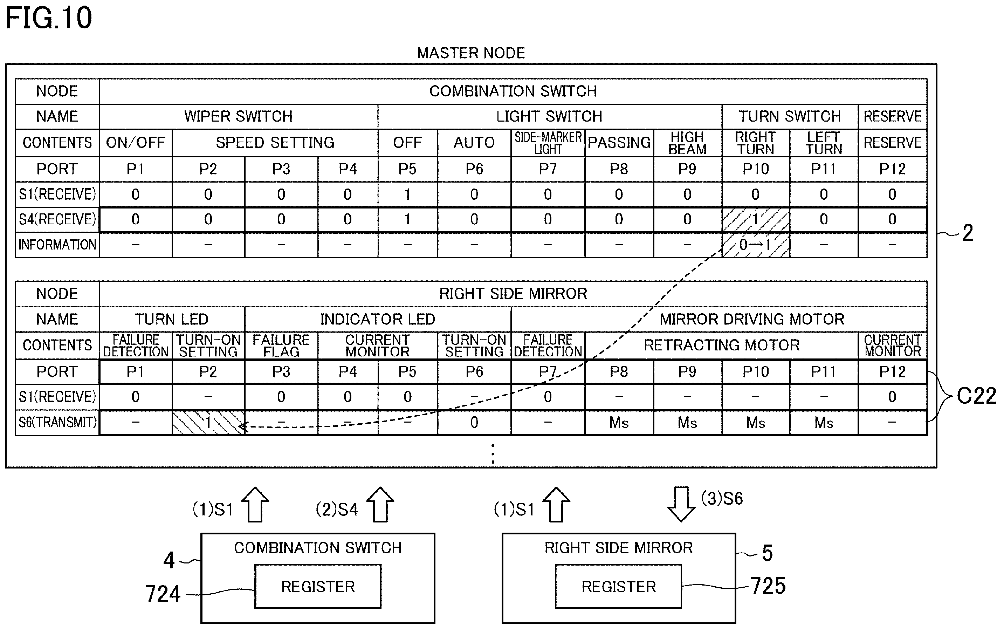

In the example of FIG. 9, the master node 2 transmits initial configuration data SC1 (see FIG. 8) to the combination switch unit 4. The combination switch unit 4 stores the initial configuration data SC1 received from the master node 2 in the combination configuration area 771 (see the upper section in FIG. 5). When the combination switch unit 4 finishes storing of the initial configuration data SC1 in the combination configuration area 771, the combination switch unit 4 returns detection data in an initial state stored in the detection signal area to the master node 2 in response to a request from the master node 2. The master node 2 stores detection data received from the combination switch unit 4 in the memory 25 (see the upper section "S1 (reception)" row in FIG. 10).

Similarly, the master node 2 transmits initial configuration data SC2 (see FIG. 8) to the right side mirror unit 5. The slave node 7 of the right side mirror unit 5 stores the initial configuration data SC2 received from the master node 2 in the side configuration area 772 (see the upper section in FIG. 6). When the right side mirror unit 5 finishes storing of the initial configuration data SC2 in the side configuration area 772, the right side mirror unit 5 returns detection data in the initial state stored in the detection signal area to the master node 2 as a detection signal in response to a request from the master node 2. In the master node 2, the detection data received from the right side mirror unit 5 is stored in the memory 25 (see the lower section "S1 (reception)" row in FIG. 10).

In a case where the initial configuration data is stored in each slave node 7 beforehand, no process is performed in step S1 and the process proceeds to the next step.

### [Step S2]

In this example, description will be given on a process in a case where at time t = T12 (T12 > T11) after the initial configuration processing in step S1, the driver manipulates the turn switch 43 included in the combination switch unit 4 to the right turn side.

When the turn switch 43 is manipulated to the right turn side, an ON setting signal is input to from a digital output port DOR of the turn switch 43 to the port P10 of the driver group 74 For example, a digital signal that changes from "0" to "1" is input to the port P10. This change of the digital signal is written in the detection signal area of the combination configuration area 771 through the driver group 74 and the selector 73. The digital output port DOR is an example of a device port.

### [Step S3]

In each slave node 7, when a change of the detection signal area is detected, an event notification is transmitted to the master node 2. In the event notification, notification of a change content of the detection signal area is issued.

In this example, since the value of the port P10 in the detection signal area changes from "0" to "1" by manipulation of the turn switch 43 described above, the combination switch unit 4 notifies the master node 2 of a change of the value of the detection signal area. Specifically, for example, the combination switch unit 4 transmits detection data D4 of the entire detection signal area in which the change at the port P10 is reflected, to the master node 2 as a detection signal. In this manner, the detection data D4 of the entire detection signal area may be transmitted to the master node 2, or only detection data at the port P with a change of the value may be transmitted to the master node 2.

### [Steps S4 and S5]

In next step S4, the master node 2 performs processing in accordance with a content of the event notification (also referred to as "event processing"). In the event processing, the recognition step, the determination step, and the manipulation step described above are performed.

In this example, the master node 2 performs information processing based on difference data between the detection data received in step S1 and currently received detection data D4, as the recognition step. Specifically, the master node 2 recognizes that the turn switch 43 is manipulated to the right turn side based on the change at the port P10 of the combination switch unit 4 and the connection data.

Thereafter, through step Pz1 through Pz4 of the determination step, the master node 2 determines an action of "turning on the right turn lamp (including the right turn lamp of the right side mirror unit 5) of the vehicle CA" as an action to be executed of the vehicle CA.

Subsequently, as the manipulation step, the master node 2 determines that the slave node 7 to which the right turn lamp is connected is a manipulation target and the right turn lamp is blinked as a manipulation content. Then, the master node 2 generates an instruction code C5 of instructing blinking of the right turn lamp, and transmits an instruction signal including the instruction code C5 to the slave node 7 to which the right turn lamp is connected (including the right side mirror unit 5) (step S5). The instruction code C5 here is, for example, a code indicating turning on (blinking) of the port P2.

### [Steps S6 and S7]

The slave node 7 of the right side mirror unit 5 receives the instruction signal (step S6), and outputs a manipulation signal based on the instruction code from the port based on the instruction code C5. Specifically, the slave node 7 of the right side mirror unit 5 outputs a manipulation signal in a digital format of indicating on-control from the port P2, based on the instruction code C5 (step S7).

### [Steps S8 and S9]

In step S8, the master node 2 requests acknowledgement of determining whether output setting based on the instruction code C5 is performed or not, to the slave node 7 to which the instruction signal has been transmitted. Then, in next step S9, the slave node 7 that has received acknowledgement returns acknowledgement indicating a state of output setting based on the instruction code, to the master node 2.

In this example, acknowledgement is transmitted and received between the master node 2 and the slave node 7 of the right side mirror unit 5.

In the manner described above, the master node 2 includes the memory 25 storing connection data indicating a connection real between the ports of the slave nodes 7 and the device ports of onboard devices, and performs functional distribution of consolidating and integrating control of the onboard devices related to a behavior of the vehicle CA to the master node 2. Specifically, the configuration is: (1) each slave node 7 receives an output from the sensor and transmits the output to the master node 2 as a detection signal (2) the master node 2 performs the recognition step based on the detection signal, the determination step of determining an action of the vehicle, and the manipulation step of generating an instruction code, and (3) each slave node 7 outputs an output signal based on the instruction code from the port based on the instruction code.

In this manner, function of an application of the vehicle CA can be modified without a change of the configuration of the slave nodes 7, that is, without influence on the slave nodes 7. In other words, evolution of functions of the application can be absorbed by the master node 2. Accordingly, the system can respond flexibly and promptly to evolution and modification of functions of the application of the vehicle CA.

In addition, functions allocated to the slave nodes 7 are significantly simple, and thus, standardized and highly versatile slave nodes 7 can be used regardless of sensors and manipulation targets connected to the slave nodes 7. This enables a significant reduction in development workload and costs, even in cases where functions of an application of the vehicle CA are evolved and modified, or where sensors and manipulation targets vary among vehicle models.

### INDUSTRIAL APPLICABILITY

The vehicle control system disclosed here is useful because the vehicle control system can respond flexibly and promptly to evolution and modification of vehicle functions.

### DESCRIPTION OF REFERENCE CHARACTERS

- 1: vehicle control system
- 2: master node
- 25: memory
- 7: slave node
- C5: instruction code
- P: port

## Claims

1. A vehicle control system comprising:
a master node (2),
a plurality of slave nodes (7),
a communication network (B1, B2), and
a plurality of onboard devices (41, 42, 51, 52), wherein
the master node is connected to the plurality of slave nodes through the communication network,
each of the plurality of slave nodes includes; a plurality of ports to each of which one or more onboard devices are connected; and a plurality of driver units connected to the ports in a one-to-one relationship,
each of the onboard devices includes at least one of a sensor or a manipulation target,
the master node includes a memory that stores connection data indicating a connection relationship between the ports of the slave nodes and device ports of the onboard devices,
one or more of the slave nodes receive output of one or more of the sensors through the ports, convert an input signal from the one or more of the sensors into a predetermined signal format without performing recognition and determination on a specific content of input information, and transmit the converted signal to the master node as a detection signal,
the master node being configured to perform
recognition processing of recognizing a specific content of detection information acquired by the one or more of the sensors, based on the connection data stored in the memory and a change with time of the detection signal,
determination processing of determining an action of a vehicle based on the information recognized in the recognition processing, and
manipulation processing of specifying one or more of the ports to which one or more of the manipulation targets in the action of the vehicle determined in the determination processing are connected based on the connection data, generating an instruction code of instructing an output content of the specified one or more ports, the instruction code including (i) identification data of the specified one or more ports to which the one or more of the manipulation targets are connected and (ii) output setting of each of the specified one or more ports associated with the identification data, and transmitting the instruction code to one or more of the slave nodes including the specified one or more ports, and
one or more of the driver units of the one or more slave nodes that have received the instruction code are configured to output a manipulation signal based on the instruction code from the specified one or more ports based on the instruction code.

2. The vehicle control system according to claim 1, wherein the slave node that receives the output of the sensor is configured to perform event processing of transmitting the detection signal to the master node using a change of the output of the sensor as a trigger.

3. The vehicle control system according to claim 2, wherein in the event processing, the slave node transmits, to the master node, the detection signal for both the port at which the output of the sensor has changed and the port at which the output of the sensor has not changed.

4. The vehicle control system according to any one of claims 1 to 3, wherein the slave node that receives the output of the sensor and the slave node that receives the instruction code are connected to the master node through different communication lines.

5. The vehicle control system according to any one of claims 1 to 3, wherein the slave node that receives the output of the sensor and the slave node that receives the instruction code are the identical slave node.

## Patentansprüche

1. Fahrzeugsteuersystem, umfassend:
einen Master-Knoten (2),
eine Mehrzahl von Slave-Knoten (7),
ein Kommunikationsnetzwerk (B1, B2) und
eine Mehrzahl von Bordvorrichtungen (41, 42, 51, 52),
wobei
der Master-Knoten über das Kommunikationsnetzwerk mit der Mehrzahl von Slave-Knoten verbunden ist,
jeder der Mehrzahl von Slave-Knoten umfasst; eine Mehrzahl von Ports, mit denen jeweils eine oder mehrere Bordvorrichtungen verbunden sind; und eine Mehrzahl von Treibereinheiten, die in einer Eins-zu-eins-Beziehung mit den Ports verbunden sind,
jede der Bordvorrichtungen einen Sensor und/oder ein Betätigungsziel umfasst,
der Master-Knoten einen Speicher umfasst, der Verbindungsdaten speichert, die eine Verbindungsbeziehung zwischen den Ports der Slave-Knoten und Vorrichtungsports der Bordvorrichtungen angeben,
ein oder mehrere der Slave-Knoten eine Ausgabe eines oder mehrerer der Sensoren über die Ports empfangen, ein Eingangssignal von dem einen oder den mehreren Sensoren in ein vorgegebenes Signalformat umwandeln, ohne eine Erkennung und Bestimmung hinsichtlich eines spezifischen Inhalts von Eingangsinformationen durchzuführen, und das umgewandelte Signal als ein Erfassungssignal an den Master-Knoten übertragen,
der Master-Knoten dazu eingerichtet ist, Folgendes durchzuführen:
eine Erkennungsverarbeitung zum Erkennen eines spezifischen Inhalts von Erfassungsinformationen, die von dem einen oder den mehreren Sensoren erfasst wurden, auf Grundlage der in dem Speicher gespeicherten Verbindungsdaten und einer zeitlichen Änderung des Erfassungssignals,
eine Bestimmungsverarbeitung zum Bestimmen einer Aktion eines Fahrzeugs auf Grundlage der in der Erkennungsverarbeitung erkannten Informationen und
eine Betätigungsverarbeitung zum Spezifizieren eines oder mehrerer der Ports, mit denen eines oder mehrere der Betätigungsziele bei der in der Bestimmungsverarbeitung bestimmten Aktion des Fahrzeugs verbunden sind, auf Grundlage der Verbindungsdaten, zum Erzeugen eines Anweisungscodes zum Anweisen eines Ausgabeinhalts des einen oder der mehreren spezifizierten Ports, wobei der Anweisungscode (i) Identifikationsdaten des einen oder der mehreren spezifizierten Ports, mit denen das eine oder die mehreren Betätigungsziele verbunden sind, und (ii) eine den Identifikationsdaten zugeordnete Ausgabeeinstellung jedes der spezifizierten Ports umfasst, und zum Übertragen des Anweisungscodes an einen oder mehrere der Slave-Knoten, die den einen oder die mehreren spezifizierten Ports umfassen, und
eine oder mehrere der Treibereinheiten des einen oder der mehreren Slave-Knoten, die den Anweisungscode empfangen haben, dazu eingerichtet sind, auf Grundlage des Anweisungscodes ein Betätigungssignal von dem einen oder den mehreren spezifizierten Ports auf Grundlage des Anweisungscodes auszugeben.

2. Fahrzeugsteuersystem nach Anspruch 1, wobei der Slave-Knoten, der die Ausgabe des Sensors empfängt, dazu eingerichtet ist, eine Ereignisverarbeitung zum Übertragen des Erfassungssignals an den Master-Knoten durchzuführen, wobei eine Änderung der Ausgabe des Sensors als Auslöser verwendet wird.

3. Fahrzeugsteuersystem nach Anspruch 2, wobei der Slave-Knoten bei der Ereignisverarbeitung das Erfassungssignal sowohl für den Port, an dem sich die Ausgabe des Sensors geändert hat, als auch für den Port, an dem sich die Ausgabe des Sensors nicht geändert hat, an den Master-Knoten überträgt.

4. Fahrzeugsteuersystem nach einem der Ansprüche 1 bis 3, wobei der Slave-Knoten, der die Ausgabe des Sensors empfängt, und der Slave-Knoten, der den Anweisungscode empfängt, über unterschiedliche Kommunikationsleitungen mit dem Master-Knoten verbunden sind.

5. Fahrzeugsteuersystem nach einem der Ansprüche 1 bis 3, wobei der Slave-Knoten, der die Ausgabe des Sensors empfängt, und der Slave-Knoten, der den Anweisungscode empfängt, ein und derselbe Slave-Knoten sind.

## Revendications

1. Système de commande de véhicule comprenant :
un nœud maître (2),
une pluralité de nœuds esclaves (7),
un réseau de communication (B1, B2), et
une pluralité de dispositifs embarqués (41, 42, 51, 52),
dans lequel
le nœud maître est connecté à la pluralité de nœuds esclaves par l'intermédiaire du réseau de communication,
chacun de la pluralité de nœuds esclaves comprend ; une pluralité de ports à chacun desquels un ou plusieurs dispositifs embarqués sont connectés ; et une pluralité d'unités de pilotage connectées aux ports selon une relation biunivoque,
chacun des dispositifs embarqués comprend au moins l'un parmi un capteur et une cible d'actionnement,
le nœud maître comprend une mémoire qui stocke des données de connexion indiquant une relation de connexion entre les ports des nœuds esclaves et des ports de dispositif des dispositifs embarqués,
un ou plusieurs des nœuds esclaves reçoivent une sortie d'un ou de plusieurs des capteurs par l'intermédiaire des ports, convertissent un signal d'entrée provenant du ou des capteurs en un format de signal prédéterminé sans effectuer de reconnaissance ni de détermination concernant un contenu spécifique d'informations d'entrée, et transmettent le signal converti au nœud maître en tant que signal de détection,
le nœud maître étant configuré pour effectuer :
un traitement de reconnaissance consistant à reconnaître un contenu spécifique d'informations de détection acquises par le ou les capteurs, sur la base des données de connexion stockées dans la mémoire et d'une variation dans le temps du signal de détection,
un traitement de détermination consistant à déterminer une action d'un véhicule sur la base des informations reconnues lors du traitement de reconnaissance, et
un traitement d'actionnement consistant à spécifier, sur la base des données de connexion, un ou plusieurs des ports auxquels une ou plusieurs des cibles d'actionnement intervenant dans l'action du véhicule déterminée lors du traitement de détermination sont connectées, à générer un code d'instruction ordonnant un contenu de sortie du ou des ports spécifiés, le code d'instruction comprenant (i) des données d'identification du ou des ports spécifiés auxquels la ou les cibles d'actionnement sont connectées et (ii) un réglage de sortie de chacun du ou des ports spécifiés associé aux données d'identification, et à transmettre le code d'instruction à un ou plusieurs des nœuds esclaves comprenant le ou les ports spécifiés, et
une ou plusieurs des unités de pilotage du ou des nœuds esclaves ayant reçu le code d'instruction sont configurées pour délivrer, sur la base du code d'instruction, un signal d'actionnement depuis le ou les ports spécifiés sur la base du code d'instruction.

2. Système de commande de véhicule selon la revendication 1, dans lequel le nœud esclave qui reçoit la sortie du capteur est configuré pour effectuer un traitement événementiel consistant à transmettre le signal de détection au nœud maître en utilisant une variation de la sortie du capteur comme déclencheur.

3. Système de commande de véhicule selon la revendication 2, dans lequel, lors du traitement événementiel, le nœud esclave transmet au nœud maître le signal de détection à la fois pour le port au niveau duquel la sortie du capteur a changé et pour le port au niveau duquel la sortie du capteur n'a pas changé.

4. Système de commande de véhicule selon l'une quelconque des revendications 1 à 3, dans lequel le nœud esclave qui reçoit la sortie du capteur et le nœud esclave qui reçoit le code d'instruction sont connectés au nœud maître par l'intermédiaire de lignes de communication différentes.

5. Système de commande de véhicule selon l'une quelconque des revendications 1 à 3, dans lequel le nœud esclave qui reçoit la sortie du capteur et le nœud esclave qui reçoit le code d'instruction sont un seul et même nœud esclave.
